# EUROPÄISCHE PATENTSCHRIFT

(11) **EP 1 511 984 B1**
(45) Veröffentlichungstag und Bekanntmachung des Hinweises auf die Patenterteilung: **15.12.2010**
(21) Anmeldenummer: 03729888.2
(22) Anmeldetag: 13.05.2003
(51) Int. Cl.: G01M 1/24, G01M 1/04, F16C 33/04, F16C 13/04

(54) **AUSWUCHTMASCHINE**
BALANCING MACHINE
MACHINE D'EQUILIBRAGE

(30) Priorität: 22.05.2002 DE 10223011
(43) Veröffentlichungstag der Anmeldung: 09.03.2005
(73) Patentinhaber: Schenck RoTec GmbH, 64293 Darmstadt (DE)
(72) Erfinder: ROGALLA, Martin, D-64297 Darmstadt (DE); KISSEL, Werner, 68647 Biblis (DE); MUENZEL, Juergen, 65428 Ruesselsheim (DE)
(74) Vertreter: Haar, Lucas Heinz Jörn
(86) Internationale Anmeldenummer: PCT/DE2003/001532
(87) Internationale Veröffentlichungsnummer: WO 2003/098180

(56) Entgegenhaltungen:
- DE-A- 19 526 497
- US-A- 1 486 115

## Beschreibung

Die Erfindung betrifft eine Auswuchtmaschine zum Messen und Ausgleichen der Unwucht von Rotoren, insbesondere von Kurbelwellen, mit einem Gleitlager zur drehbaren Lagerung eines auszuwuchtenden Rotors und einer Versorgungseinrichtung zur Versorgung des Gleitlagers mit einem Fluid, wobei das Gleitlager eine Lagerschale mit hohlzylindrischer Lagerfläche aufweist, in der ein Rotorabschnitt mit einer zylindrischen Gleitfläche gelagert ist

In Auswuchtmaschinen sind für den auszuwuchtenden Rotor je nach dessen Ausgestaltung und Größe unterschiedliche Lagereinrichtungen zur rotierbaren Abstützung vorgesehen. Übliche Lagereinrichtungen sind beispielsweise Tragrollenlager, bei denen der Rotor auf Paaren von Tragrollen aufgelegt wird. Bei leichten Rotoren werden Prismenlager aus unterschiedlichsten Materialien eingesetzt, wobei jedoch nur geringe Flächenpressungen zulässig sind. Bei leichten Rotoren kann eine aerostatische oder aerodynamische Lagerung vorgesehen werden. Bei hohen Drehzahlen und schweren Rotoren kommen in der Regel Gleitlager zum Einsatz, beispielsweise hydrostatische oder hydrodynamische Gleitlager. Dabei werden vielfach ähnliche oder gleiche Lager verwendet wie im Betriebszustand, die genau auf den Lagerzapfen des jeweiligen Rotors ausgelegt sind.

Bei einer aus US 1,486,115 bekannten Auswuchtmaschine der eingangs angegebenen Art weist das Gleitlager zwei in einem Abstand voneinander angeordneten, segmentförmige Lagerschalen auf, die auf einer Abstützung derart befestigt sind, daß sie begrenzte Schaukelbewegungen ausführen können. Die Lagerschalen haben in der Lagerfläche mündende Bohrungen, die über flexible Leitungen an ein Versorgungssystem zur Zuführung von unter einem Druck stehenden Öl angeschlossen sind. Bei Drehung des gelagerten Rotors wird zwischen diesem und den Lagerschalen ein keilförmiges Ölpolster gebildet, welches den Rotor trägt.

Eine Auswuchtmaschine mit flüssigkeitsversorgten Gleitlagern ist außerdem aus der Firmendruckschrift B 1420 "Auswuchtmaschinen für Kurbelwellen" der Carl Schenck AG, Darmstadt, bekannt. Bei dieser Maschine werden die Gleitlager beim Meßlauf durch gefiltertes Kühlmittel geschmiert, welches zum Kühlen des Ausgleichswerkzeuges beim Ausgleichsvorgang verwendet wird.

In Auswuchtmaschinen erfordern die bekannten mit Flüssigkeit versorgten Gleitlager einen erheblichen baulichen Aufwand, da besondere Einrichtungen zum Spritzschutz und zur Abkapselung des Flüssigkeitsversorgungssystems gegenüber der Umgebung erforderlich sind.

Es ist auch bekannt, die Gleit- oder Lagerflächen von Gleitlagern aus keramischen Werkstoffen herzustellen. In DE 195 26 497 A1 ist beispielsweise ein Gleitlager mit keramischen Gleitkörpern zur Bildung eines hydrodynamischen Schmierflüssigkeitskeils und einer durch eine Keramikschicht gebildete Gegenlauffläche bekannt. Weiterhin sind gesinterte Verbundwerkstoffe zur Bildung von Gleitlagerpaarungen bekannt, wobei die Verbundwerkstoffe ein ausreichend großes Porenvolumen zur Speicherung von Öl zur Lagerschmierung dienen, vergleiche DE 38 22 919 A1, DE 42 14 877 A1. Bei den bekannten Keramiklagern oder Sinterlagern bestehen die zusammenwirkenden Gleitflächen der Lagerpartner jeweils aus dem gleichen oder gleichartigen Material.

Der Erfindung liegt die Aufgabe zugrunde, eine Auswuchtmaschine der eingangs genannten Art zu schaffen, die einfach aufgebaut und dadurch kostengünstig herstellbar ist und die sich durch hohe Meßgenauigkeit auszeichnet.

Zur Lösung dieser Aufgabe ist bei der Auswuchtmaschine nach der Erfindung das Gleitlager mit einer Lagerschale aus einem harten Keramikmaterial versehen, und die Versorgungseinrichtung zur Versorgung des Gleitlagers mit einem Fluid ist für die Zufuhr von minimalen Mengen des Fluids im Bereich von 1 ml/h bis 100 ml/h, insbesondere eines Aerosols oder Ölaerosols, ausgelegt.

Die erfindungsgemäße Ausgestaltung sieht vor, daß anstelle eines z.B. bei der Einlagerung von schweren Rotoren und hohen Drehzahlen üblicherweise verwendeten hydrodynamischen Gleitlagers ein mit einer minimalen Fluidmenge versorgtes Gleitlager mit einer harten, verschleißfesten Keramikiagerschate mit geringer Freßneigung zum Einsatz kommt. Überraschenderweise hat sich herausgestellt, daß bei einer harten und glatten Keramik-Lagerschale eine sehr geringe Versorgungsmenge zu einer sicheren Schmier- und Kühlmittelversorgung ausreicht. Das Lager wird hierbei im Mischreibungsgebiet betrieben, es kommt also nicht zu einer vollständigen Trennung der Oberflächen von Rotorzapfen und Lagerschale. Tribologisch besonders günstig ist die Kombination von metallischem Rotorzapfen und keramischer Lagerschale. Sie verhindert zuverlässig adhäsiven Verschleiß ("Fressen"), obwohl die Lagerfläche mit einer minimalen Schmiermittelmenge versorgt wird. Durch die Erfindung kann die Versorgungseinrichtung für Schmier- und Kühlmittel auf ein einfaches Minimalmengensystem reduziert werden und die Probleme, insbesondere hinsichtlich der Umweltfreundlichkeit, die bei einer hydrodynamischen Flüssigkeitsschmierung auftreten, werden vermieden.

Die Versorgungsmenge für ein Gleitlager nach der Erfindung liegt im Bereich von wenigen Millilitern pro Stunde, wogegen bei z.B. hydrodynamischen Gleitlagern Mengen im Bereich von Litern pro Minute erforderlich sind. Bei einer Flüssigkeitsschmierung sind üblicherweise spezielle Betriebsmittelvorschriften des Anwenders zu beachten, die von Anwender zu Anwender oder auch fallweise differieren können, was bei der erfindungsgemäßen Versorgung in vorteilhafter Weise entfällt. Darüber hinaus entfallen die Probleme, insbesondere die Umweltprobleme, die beim Einsatz von Ölen als Betriebsflüssigkeiten im Hinblick auf Brand-, Explosions- und Emissionsschutz oder auf Gewässerschutzvorschriften bestehen. Die Erfindung stellt damit ein umweltfreundliches Arbeiten sicher.

Besonders vorteilhaft ist im Hinblick auf die erzielbare Auswuchtgenauigkeit, daß ein Benässen des Rotors mit Schmier- und Kühlflüssigkeit, das insbesondere bei nicht rotationssymmetrischen Rotoren wie Kurbelwellen zu Verfälschungen des Meßergebnisses führt, sicher unterbunden ist. Vorteilhaft in Hinblick auf die erzielbare Auswuchtgenauigkeit ist ferner, daß die Lagersteifigkeit nicht durch einen Flüssigkeitsfilm und damit auch durch die Winkelgeschwindigkeit des Rotors beeinflußt wird. Außerdem kann eine Kosteneinsparung dadurch erzielt werden, daß die Versorgung z. B. mit Aerosol leicht an die unterschiedlichen Arbeitsbedingungen anpaßbar ist.

Als Aerosol wird vorteilhafterweise ein Ölaerosol eingesetzt, wobei mikroskopisch fein in Luft zerstäubtes Öl der Schmierzone zugeführt wird und dort die Schmierung und gegebenenfalls auch die Kühlung bewirkt. Da ein äußerst feiner Ölnebel erzeugt wird, ist eine sparsame Verwendung von Öl sichergestellt. Das Aerosol kann aber auch Stoffe oder Zusatzstoffe aufweisen, die beispielsweise eine nicht haftende Festkörperschmierung erlauben oder die Einfluß auf eine homogene Vernebelung des Aerosols nehmen können.

Bei einer Ausgestaltung der Erfindung, bei der eine Aerosolapplikation innerhalb des Lagerbereichs der Lagerschale vorgesehen ist, können vorteilhaft Bauteile einer hydrodynamischen oder hydrostatischen Lagerung weiterhin verwendet werden. Dies ist auch bei Tropfapplikation möglich. Darüber hinaus sind die Lagerschalen durch das Einblasen des Aerosols vor Verunreinigungen geschützt oder lassen sich dadurch oder durch Einblasen von Luft bei Bedarf leicht säubern.

Eine besonders einfache Ausgestaltung sieht vor, daß die Fluidapplikation an der freiliegenden, nicht von der Lagerschale umgebenen Oberfläche des Rotorabschnitts erfolgt. Bei einer Sprühapplikation kann die Austrittsöffnung einer Zerstäubereinrichtung und bei einer Tropf-Applikation der Tropfenauslaß optimal positioniert werden. Die Sprühapplikation kann vorteilhaft durch einen bevorzugt zu Beginn des Meßlaufs vorgenommenen kurzen Sprühstoß erfolgen.

Um die Prozeßsicherheit des Gleitlagers der erfindungsgemäßen Auswuchtmaschine zu gewährleisten kann nach einem weiteren Vorschlag der Erfindung eine Temperaturüberwachung des Gleitlagers bzw. einer Lagerschale desselben vorgesehen sein. Ein eventuelles Versagen der Minimalmengenschmierung äußert sich aufgrund der zunehmenden Reibung zwischen Lagerschale und Rotorzapfen in einem Temperaturanstieg und kann daher durch die Temperaturüberwachung frühzeitig erkannt und zur Einleitung von Gegenmaßnahmen genutzt werden.

Bei einer Auswuchtmaschine mit einer Station, bei der der Rotor zwischen Meßvorgang und Ausgleichsvorgang nicht umgelagert wird, kann die Austrittsöffnung z. B. einer Zerstäubereinrichtung oder einer Tropfeinrichtung in vorteilhafter Weise beim Meßvorgang an der Lagerstelle zwecks Lagerschmierung und Kühlung und beim Ausgleichsvorgang zur Kühlung und Schmierung des Ausgleichswerkzeugs positioniert sein. Da bei einer solchen Maschine mehrere Applikationsstellen zu versorgen sind, kann dadurch auf einfachste Weise ein sparsamer Verbrauch des Kühl- und Schmiermittels sichergestellt werden.

Um die Lagerstellen und die Ausgleichsstellen getrennt und zeitlich nacheinander z.B. mit Aerosol versorgen zu können, können bewegbare Versorgungsleitungen vorgesehen werden, die sich an der jeweiligen Applikationsstelle positionieren lassen. Es können auch Versorgungsleitungen zu jeder Applikationsstelle vorgesehen sein, die zu- und abschaltbar ausgebildet sind.

Wenn nur bestimmte, aber auch wenn gleichzeitig alle Applikationsstellen mit z.B. Aerosol versorgt werden, ergibt sich der gravierende Vorteil einer "trockenen" Auswuchtmaschine, bei der Verkleidungen oder Auffangbehälter zum Schutz gegen z.B. Spritzflüssigkeit oder abtropfende Flüssigkeit entfallen können. Mit der Erfindung wird erstmals eine "trockene" Ausbildung der Fluidschmierung sowohl beim Unwuchtmeßvorgang als auch beim Ausgleichsvorgang erreicht.

Vorteilhafte Ausgestaltungen der Erfindung sind in der Zeichnung dargestellt und werden nachfolgend näher beschrieben. Es zeigen
- Figur 1: eine Schnittdarstellung einer erfindungsgemäßen Lagereinrichtung und
- Figur 2: eine erfindungsgemäße Unwuchtmeß- und-ausgleichsvorrichtung in Seitenansicht.

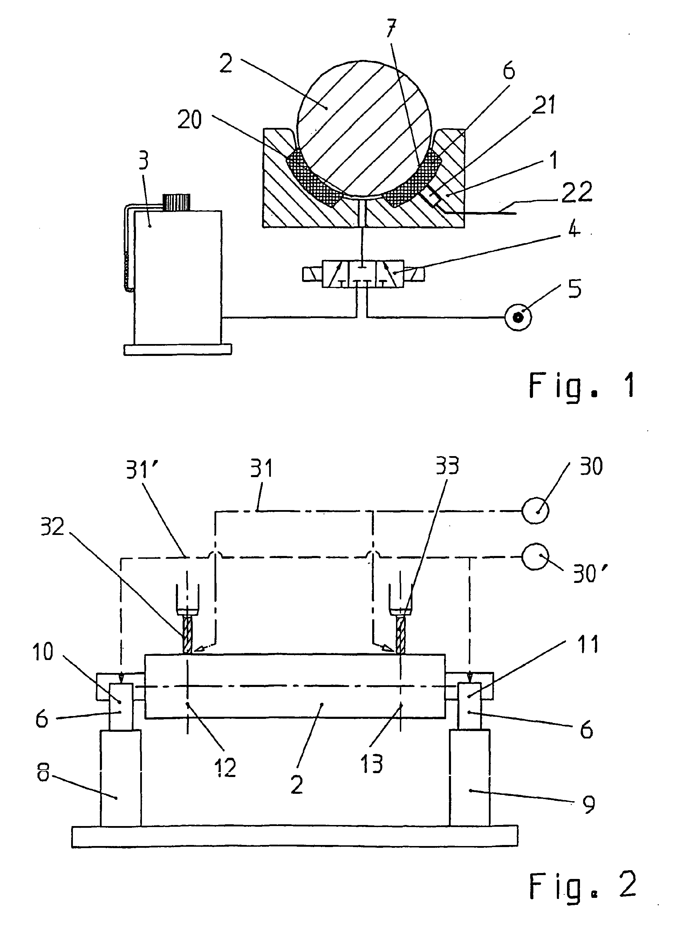

Die schematisch in Fig. 1 dargestellte Lagereinrichtung weist ein Gleitlager 1 für den Rotor 2, eine für die Zufuhr von Minimalmengen ausgelegte Fluidversorgungseinrichtung 3, eine Steuereinrichtung 4 sowie einen Druckmittelanschluß 5 auf. Die Lagereinrichtung ist Teil einer in Fig. 2 schematisch dargestellten Unwuchtmeß- und -ausgleichsvorrichtung für den Rotor 2, in die der Rotor 2 mit seinen Lagerstellen 10, 11 in zwei als Lagerständer 8, 9 ausgebildeten Lagereinrichtungen eingelagert ist. Zum Auswuchten werden in bekannter Weise der Rotor 2 in Rotation versetzt, die Unwuchischwingungen aufgrund der zu beseitigenden Unwucht gemessen und ausgewertet und der Rotor 2 in vorher bestimmten Ausgleichsebenen 12, 13 durch Materialentfernung an den Ausgleichsstellen ausgewuchtet.

Die Lagereinrichtungen weisen Lagerschalen 6 auf, die den die Lagerstellen 10, 11 aufweisenden Lagerzapfen des Rotors 2 angepaßt sind. Die Lagerschale 6 hat zur Aufnahme des Lagerzapfens eine hohlzylindrische Ausnehmung 7 mit einer taschenförmigen Vertiefung 20 zur Applikation des Aerosols oder von Luft zum Durchblasen der Lagerstelle. Die taschenförmige Vertiefung 20 steht über eine Steuereinrichtung 4 in Form eines Wegeventils entweder mit dem Druckmittelanschluß 5 oder der Minimalmengen-Fluidversorgungseinrichtung 3 in Verbindung oder ist abgesperrt. Die Lagerschale 6 besteht aus zwei selbstausrichtenden Lagerelementen aus sehr hartem Keramikmaterial und hat eine sehr glatte Lagerfläche. Die Schmiegung zwischen der Lagerschale 7 und dem Rotor 2 ist möglichst optimal.

Die Fluidversorgungseinrichtung 3 ist als Aerosol-Zerstäubereinrichtung ausgebildet. Die Fluidversorgungseinrichtung 3 kann auch alternativ oder zusätzlich zur Abgabe von Minimalmengen eines Fluids an eine Tropfeinrichtung oder zur Versorgung eines in seinem Volumen mit Fluid getränkten Schmierkörpers, der periodisch mit dem Rotorabschnitt 2 in Kontakt gebracht wird, ausgebildet sein. Mit der Aerosol-Zerstäubereinrichtung wird beispielsweise Öl in Luft äußerst fein zerstäubt und so einer Austrittsöffnung in der taschenförmigen Vertiefung 20 der Lagerschale 6 zugeführt. Die Aerosol-Zerstäubereinrichtung steht dazu mit dem Druckmittelanschluß 5 für Druckluft und über die Steuereinrichtung 4 während der Rotation des Rotors 2 in der Meßphase mit der taschenförmigen Vertiefung 20 in Verbindung, wie dies der linke Abschnitt der Steuereinrichtung 4 schematisch wiedergibt. In Versuchen hat sich überraschend herausgestellt, daß schon kleine Aerosolmengen im Bereich von etwa 1 bis 100 ml/h auch beim Auswuchten schwerer Rotoren mit hohen Drehzahlen vollkommen ausreichen, um eine Beschädigung von Lagerflächen und eine übermäßige Erwärmung sicher zu verhindern; hierzu ist lediglich zu Beginn des Meßlaufs ein Aerosol-Sprühstoß von ca. 1 Sekunde Dauer ausreichend. Der Druckmittelanschluß kann bei Bedarf, wie schematisch im rechten Abschnitt der Steuereinrichtung 4 wiedergegeben, direkt mit der taschenförmigen Vertiefung 20 zwecks Säuberung der Lagerstelle durch Durchblasen von Luft verbunden sein; die Aerosolzufuhr ist dann unterbunden. Die Säuberung der Lagerstelle kann jedoch auch mittels Aerosol vorgenommen werden.

Zur Überwachung der Betriebstemperatur ist an der Lagerschale 7 ein Temperatursensor 21 angebracht, der durch eine Leitung 22 mit der Maschinensteuerung verbunden ist. Überschreitet die Betriebstemperatur des Lagers einen vorgegebenen Grenzwert, so kann dadurch die sofortige Zuführung einer zusätzlichen Fluidmenge zur Schmierung des Gleitlagers ausgelöst werden. Bei weiterem Temperaturanstieg kann auch die Stillsetzung des Rotors veranlaßt werden.

Die in Fig.2 schematisch dargestellte Unwuchtmeß- und -ausgleichseinrichtung einer Auswuchtmaschine weist zur drehbaren Einlagerung des Rotors 2 zwei Lagerständer 8, 9 mit Lagerschalen 6 auf, die wie in Fig. 1 ausgebildet sind, und hat ein Schmier- und Kühlmittelversorgungssystem, das über Anschlüsse 30, 30' mit einer Minimalmengen-Fluidversorgungseinrichtung zur Lieferung eines Aerosols verbunden ist. Die Minimalmengen-Fluidversorgungseinrichtung entspricht prinzipiell der unter Bezugnahme auf Fig.1 beschriebenen Einrichtung. Zum Ausgleich der ermittelten Unwucht sind Ausgleichswerkzeuge 32 vorgesehen, mit denen an den Ausgleichsstellen in den Ausgleichsebenen 12, 13 Rotormaterial entfernt wird.

Das Schmier- und Kühlmittelversorgungssystem hat zwei Leitungssysteme 31 und 31' zur Versorgung unterschiedlicher Applikationsstellen. Mit dem Leitungssystem 31' werden die Lagerstellen 10 und 11 mit Aerosol versorgt, während das Leitungssystem 31 den Ausgleichsstellen und den Ausgleichswerkzeugen 32 und 33 Aerosol zuführt. Die Austrittsöffnungen der Versorgungsleitungen des Leitungssystems 31' sind nahe den nicht von den Lagerschalen 6 umgebenen Rotorabschnitten der Lagerstellen 10, 11 angeordnet, während die Austrittsöffnungen der -Versorgungsleitungen des Leitungssystems 31 nahe den Ausgleichsebenen des Rotors 2 angeordnet sind.

Die Austrittsöffnungen der Versorgungsleitungen des Leitungssystems 31' können alternativ innerhalb der Lagerschalen 6 liegen, wie dies in Fig.1 dargestellt ist.

Zwecks sparsamer Verwendung des Aerosols können die Versorgungsleitungen so geschaltet werden, daß während der Meßphase nur die Lagerstellen 10, 11 mit Aerosol versorgt werden. Es hat sich herausgestellt, daß ein kurzer Aerosol-Sprühstoß zu Beginn des Meßlaufs ausreichend ist. Während des Ausgleichsvorgangs, bei dem der Rotor 2 stillsteht, wird ausschließlich die Ausgleichsstelle mit Aerosol versorgt, an der der Ausgleichsvorgang abläuft.

In einer nicht näher dargestellten Ausführungsform der Erfindung ist vorgesehen, daß das Leitungssystem 31 eine bewegbare Versorgungsleitung aufweist, die mit ihrer Austrittsöffnung jeweils an der Ausgleichsstelle positioniert wird, an der der Ausgleichsvorgang vorgenommen wird.

In einer weiteren Ausführungsform kann vorgesehen werden, daß nur ein Leitungssystem mit zwei bewegbaren Versorgungsleitungen vorgesehen ist, die jeweils entweder den beiden Lagerstellen 10, 11 oder den beiden Ausgleichsstellen zugeordnet werden und die in der Meßphase beide Lagerstellen 10, 11 und beim Ausgleichsvorgang nur diejenige Ausgleichsstelle mit Aerosol versorgen, an der der Ausgleichsvorgang aktuell vorgenommen wird.

Mit der Erfindung wird es erstmals möglich, Auswuchtmaschinen, die aufgrund von Lagerschmierung und Werkzeugkühlung typischerweise mit Handhabungs- und Entsorgungseinrichtungen für Schmier- und Kühlmittel versehen sind, "trocken" auszuführen. Damit kann auf alle Maßnahmen verzichtet werden, die dem Schutz vor bzw. dem Sammeln von Spritzflüssigkeit oder abtropfender Flüssigkeit dienen. Das Auswuchtergebnis wird nicht von Flüssigkeitsansammlungen auf Bereichen des Rotors beeinflußt, was zu höherer Genauigkeit führt.

## Patentansprüche

1. Auswuchtmaschine zum Messen und Ausgleichen der Unwucht von Rotoren, insbesondere von Kurbelwellen, mit einem Gleitlager (1) zur drehbaren Lagerung eines auszuwuchtenden Rotors (2) und einer Versorgungseinrichtung zur Versorgung des Gleitlagers mit einem Fluid, wobei das Gleitlager (1) eine Lagerschale (6) mit hohlzylindrischer Lagerfläche aufweist, in der ein Rotorabschnitt mit einer zylindrischen Gleitfläche gelagert ist, **dadurch gekennzeichnet, daß** die Lagerschale (6) aus einem harten Keramikmaterial besteht und die Versorgungseinrichtung zur Versorgung des Gleitlagers für die Zufuhr von Minimalmengen des Fluids im Bereich von 1 ml/h bis 100 ml/h ausgelegt ist.

2. Auswuchtmaschine nach Anspruch 1, **dadurch gekennzeichnet, daß** die Minimalmengen des Fluids als Aerosol, insbesondere Ölaerosol, zugeführt werden.

3. Auswuchtmaschine nach einem der vorhergehenden Ansprüche, **dadurch gekennzeichnet, daß** die Versorgungseinrichtung die Minimalmengen des Fluids intermittierend zuführt.

4. Auswuchtmaschine nach Anspruch 3, **dadurch gekennzeichnet, daß** in den Pausen Luft zugeführt wird.

5. Auswuchtmaschine nach einem der vorhergehenden Ansprüche, **dadurch gekennzeichnet, daß** die Fluidapplikation im Lagerbereich der Lagerschale (6) vorgesehen ist.

6. Auswuchtmaschine nach einem der vorhergehenden Ansprüche, **dadurch gekennzeichnet, daß** die Fluidapplikation im Bereich der nicht von der Lagerschale (6) umgebenen Gleitfläche des Rotorabschnitts vorgesehen ist.

7. Auswuchtmaschine nach einem der vorhergehenden Ansprüche, **dadurch gekennzeichnet, daß** Fluidapplikation mittels Tropfeinrichtung oder einer Zerstäubungseinrichtung, insbesondere als Sprühstoß, erfolgt.

8. Auswuchtmaschine nach einem der vorhergehenden Ansprüche, **dadurch gekennzeichnet, daß** das Keramikmaterial eine Härte von ca. 4000 N/mm² HV oder höher hat.

9. Auswuchtmaschine nach einem der vorhergehenden Ansprüche, **dadurch gekennzeichnet, daß** die Lagerfläche der Lagerschale sehr glatt ist, insbesondere eine Rautiefe Ra < 0,2 aufweist.

10. Auswuchtmaschine nach einem der vorhergehenden Ansprüche, **dadurch gekennzeichnet, daß** als Keramikmaterial Nichtoxidkeramik vorgesehen ist.

11. Auswuchtmaschine nach einem der vorhergehenden Ansprüche, **dadurch gekennzeichnet, daß** die Gleitfläche des Rotorabschnittes aus Metall besteht.

12. Auswuchtmaschine nach einem der vorhergehenden Ansprüche, **dadurch gekennzeichnet, daß** die Lagerschale mehrere selbstausrichtende Lagerelemente aufweist.

13. Auswuchtmaschine nach einem der vorhergehenden Ansprüche, **dadurch gekennzeichnet, daß** die Lagerfläche der Lagerschale und die Gleitfläche des Rotorabschnitts eine hochgradige Schmiegung haben.

14. Auswuchtmaschine nach einem der vorhergehenden Ansprüche, **dadurch gekennzeichnet, daß** das Gleitlager mit einer Einrichtung zur Temperaturüberwachung versehen ist.

15. Auswuchtmaschine mit einem Versorgungssystem für fluidische Schmier- und Kühlmittel, dem mehrere Applikationsstellen zugeordnet sind, nach einem der vorhergehenden Ansprüche, **dadurch gekennzeichnet, daß** das Versorgungssystem dazu ausgelegt und eingerichtet ist, dem Gleitlager (1) zur Lagerung eines auszuwuchtenden Rotors (2) und einem Ausgleichswerkzeug (32) zum Entfernen von Rotormaterial eine minimale Fluidmenge, insbesondere ein Aerosol oder Ölaerosol, zuzuführen.

16. Auswuchtmaschine nach Anspruch 15, **dadurch gekennzeichnet, daß** das Versorgungssystem zu jeder Applikationsstelle führende Versorgungsleitungen (31, 31') aufweist.

17. Auswuchtmaschine nach Anspruch 15, **dadurch gekennzeichnet, daß** das Versorgungssystem zumindest eine bewegliche Versorgungsleitung aufweist, deren Austrittsöffnung zu unterschiedlichen Applikationsstellen bewegbar ist.

18. Auswuchtmaschine nach Anspruch 17, **dadurch gekennzeichnet, daß** die bewegliche Versorgungsleitung einer oder mehreren Lagerebenen für den Rotor (6) und einer oder mehreren Ausgleichsebenen (12, 13) für den Rotor (6) zuordenbar ist.

19. Auswuchtmaschine nach einem der vorhergehenden Ansprüche 15 bis 18, **dadurch gekennzeichnet, daß** die Versorgungsleitungen abhängig vom Meß- oder Ausgleichsvorgang zu- und abschaltbar sind

## Claims

1. A balancing machine for the measurement of, and compensation for, any unbalance of rotors, in particular crankshafts, with a sliding bearing (1) for rotatably mounting a rotor (2) to be balanced and a supply device for supplying the sliding bearing with a fluid, said sliding bearing (1) comprising a bearing shell (6) with a hollow cylindrical bearing face mounting a rotor section having a cylindrical slicing face, **characterized in that** the bearing shell (6) is made of a hard ceramic material and the supply device for supplying the sliding bearing is designed to supply the fluid in a minimum amount in the range from 1ml/h to 100 ml/h.

2. The balancing machine as claimed in claim 1, **characterized in that** the minimum amounts of fluid are fed in the form of an aerosol, in particular an oil aerosol.

3. The balancing machine as claimed in any one of the preceding claims, **characterized in that** the supply device feeds the minimum amounts of fluid intermittently.

4. The balancing machine as claimed in claim 3, **characterized in that** air is supplied in the intervals.

5. The balancing machine as claimed in any one of the preceding claims, **characterized in that** provision is made for the application of fluid to take place within the bearing area of the bearing shell (6).

6. The balancing machine as claimed in any one of the preceding claims, **characterized in that** provision is made for the application of fluid to take place in the area of the sliding face, not surrounded by the bearing shell (6), of the rotor section.

7. The balancing machine as claimed in any one of the preceding claims, **characterized in that** fluid is applied by means of a drip feed device or an atomizer, in particular in the form of a brief burst.

8. The balancing machine as claimed in any one of the preceding claims, **characterized in that** the ceramic material has a Vickers hardness of about 4,000 N/mm² or higher.

9. The balancing machine as claimed in any one of the preceding claims, **characterized in that** the bearing face of the bearing shell is very smooth, having in particular a surface roughness of Ra < 0.2.

10. The balancing machine as claimed in any one of the preceding claims, **characterized in that** non oxide ceramic is provided as the ceramic material.

11. The balancing machine as claimed in any one of the preceding claims, **characterized in that** the sliding face of the rotor section is made of metal.

12. The balancing machine as claimed in any one of the preceding claims, **characterized in that** the bearing shell includes several self-aligning bearing elements.

13. The balancing machine as claimed in any one of the preceding claims, **characterized in that** the bearing face of the bearing shell and the sliding face of the rotor section have a high-grade osculation.

14. The balancing machine as claimed in any one of the preceding claims, **characterized in that** the sliding bearing is provided with a temperature monitoring device.

15. A balancing machine with a supply system for lubricating and cooling fluids which is associated with several application sites, according to any one of the preceding claims, **characterized in that** the supply system is designed and arranged to feed a minimum amount fluid, in particular an aerosol or an oil aerosol, to the sliding bearing (1) for mounting a rotor (2) to be balanced and to a balancing tool (32) for the removal of rotor material.

16. The balancing machine as claimed in claim 15, **characterized in that** the supply system includes supply lines (31, 31') leading to each application site.

17. The balancing machine as claimed in claim 15, **characterized in that** the supply system includes at least one movable supply line whose discharge orifice is movable to different application sites.

18. The balancing machine as claimed in claim 17, **characterized in that** the movable supply line is adapted to be associated with one or several bearing planes for the rotor (6) and one or several compensation planes (12, 13) for the rotor (6).

19. The balancing machine as claimed in any one of the preceding claims 15 to 18, **characterized in that** the supply lines are adapted to be connected and disconnected in dependence upon the measuring or balancing operation.

## Revendications

1. Machine d'équilibrage pour mesurer et compenser le défaut d'équilibrage de rotors, en particulier de vilebrequin, comportant un palier lisse (1) pour le logement rotatif d'un rotor (2) à équilibrer et un dispositif d'alimentation pour alimenter le palier lisse avec un fluide, ledit palier lisse (1) comportant une coquille de coussinet (6) avec une surface de logement cylindrique creuse, dans laquelle est logé un segment du rotor avec une surface de glissement cylindrique, **caractérisée en ce que** la coquille de coussinet (6) est réalisée dans un matériau céramique dur et le dispositif d'alimentation pour l'alimentation du palier lisse est configuré pour acheminer des quantités minimes de fluide dans une plage comprise entre 1 ml/h et 100 ml/h,

2. Machine d'équilibrage selon la revendication 1, **caractérisée en ce que** les quantités minimes de fluide sont acheminées sous forme d'aérosol, en particulier d'un aérosol d'huile,

3. Machine d'équilibrage selon l'une des revendications précédentes, **caractérisée en ce que** le dispositif d'alimentation achemine les quantités minimes de fluide par intermittence.

4. Machine d'équilibrage selon la revendication 3, **caractérisée en ce que** de l'air est acheminé pendant les pauses.

5. Machine d'équilibrage selon l'une des revendications précédentes, **caractérisée en ce que** l'application du fluide est prévue dans la zone de logement de la coquille de coussinet (6).

6. Machine d'équilibrage selon l'une des revendications précédentes, **caractérisée en ce que** l'application du fluide est prévue dans la zone de la surface de glissement du segment de rotor qui n'est pas entourée par la coquille de coussinet (6).

7. Machine d'équilibrage selon l'une des revendications précédentes, **caractérisée en ce que** l'application du fluide est réalisée au moyen d'un dispositif de goutte à goutte ou d'un dispositif de pulvérisation, en particulier du type à pulvérisation par impulsions.

8. Machine d'équilibrage selon l'une des revendications précédentes, **caractérisée en ce que** le matériau céramique a une dureté d'environ 4 000 N/mm² HV ou plus.

9. Machine d'équilibrage selon l'une des revendications précédentes, **caractérisée en ce que** la surface de logement de la coquille de coussinet est très lisse, en particulier avec une rugosité de surface Ra < 0,2.

10. Machine d'équilibrage selon l'une des revendications précédentes, **caractérisée en ce que** le matériau céramique prévu est une céramique non oxyde.

11. Machine d'équilibrage selon l'une des revendications précédentes, **caractérisée en ce que** la surface de glissement du segment de rotor est réalisée en métal.

12. Machine d'équilibrage selon l'une des revendications précédentes, **caractérisée en ce que** la coquille de coussinet comporte plusieurs éléments d'appui à alignement automatique.

13. Machine d'équilibrage selon l'une des revendications précédentes, **caractérisée en ce que** la surface de logement de la coquille de coussinet et la surface de glissement du segment de rotor ont une osculation très élevée.

14. Machine d'équilibrage selon l'une des revendications précédentes, **caractérisée en ce que** le palier lisse est muni d'un dispositif de contrôle de la température.

15. Machine d'équilibrage selon l'une des revendications précédentes, comportant un système d'alimentation pour un agent de refroidissement et de lubrification fluide, auquel sont associées plusieurs zones d'application, **caractérisée en ce que** le système d'alimentation est configuré et conçu pour acheminer une quantité minime de fluide, en particulier un aérosol ou un aérosol d'huile, vers le palier lisse (1) destiné au logement d'un rotor (2) à équilibrer et vers un outil d'équilibrage (32) destiné à enlever de la matière sur le rotor.

16. Machine d'équilibrage selon la revendication 15, **caractérisée en ce que** le système d'alimentation comporte des conduites d'alimentation (31, 31') menant vers chaque zone d'application.

17. Machine d'équilibrage selon la revendication 15, **caractérisée en ce que** le système d'alimentation comporte au moins une conduite d'alimentation mobile dont l'orifice de sortie peut être déplacé vers différentes zones d'application.

18. Machine d'équilibrage selon la revendication 17, **caractérisée en ce que** la conduite d'alimentation mobile peut être associée à un ou plusieurs plans de logement pour le rotor (6) et à un ou plusieurs plans d'équilibrage (12, 13) pour le rotor (6).

19. Machine d'équilibrage selon l'une des revendications 15 à 18, **caractérisée en ce que** les conduites d'alimentation peuvent être branchées et débranchées en fonction du processus de mesure ou d'équilibrage.
